# EUROPÄISCHE PATENTSCHRIFT

(11) **EP 2 802 725 B1**
(45) Veröffentlichungstag und Bekanntmachung des Hinweises auf die Patenterteilung: **29.04.2020**
(21) Anmeldenummer: 13701715.8
(22) Anmeldetag: 08.01.2013
(51) Int. Cl.: F16F 9/36, F16F 9/38, E05F 15/622

(54) **ANTRIEBSEINRICHTUNG**
DRIVE DEVICE
DISPOSITIF D'ENTRAÎNEMENT

(30) Priorität: 12.01.2012 DE 102012100220
(43) Veröffentlichungstag der Anmeldung: 19.11.2014
(73) Patentinhaber: Stabilus GmbH, 56070 Koblenz (DE)
(72) Erfinder: MISSLER, Marc, 56337 Kadenbach (DE); KNOPP, Axel, 56337 Eitelborn (DE); BOCHEN, Jan, 56337 Eitelborn (DE)
(74) Vertreter: Klein, Thomas
(86) Internationale Anmeldenummer: PCT/EP2013/050219
(87) Internationale Veröffentlichungsnummer: WO 2013/104622

(56) Entgegenhaltungen:
- EP-A1- 1 862 628
- DE-U1-202007 002 306

## Beschreibung

Die Erfindung bezieht sich auf eine Antriebseinrichtung insbesondere für eine Klappe eines Fahrzeugs, mit einem Gehäuserohr und einem Schutzrohr, die teleskopisch axial relativ zueinander bewegbar sind, wobei das Gehäuserohr mit seinem dem Schutzrohr abgewandten geschlossenen Ende an einem feststehenden Basisteil oder einem bewegbaren Bauteil und das Schutzrohr mit seinem dem Gehäuserohr abgewandten geschlossenen Ende an dem bewegbaren Bauteil oder dem Basisteil angeordnet ist, mit einem im Gehäuserohr und/oder Schutzrohr angeordneten Linearantrieb, durch den das Gehäuserohr und das Schutzrohr axial relativ zueinander bewegbar antreibbar sind, wobei das von dem Gehäuserohr oder dem Schutzrohr umschlossene Schutzrohr oder Gehäuserohr an seiner radial umlaufenden äußeren Mantelfläche von einem Dichtring umschlossen ist, durch den der zwischen Gehäuserohr und Schutzrohr gebildete Ringspalt in der maximal zueinander bewegten Einfahrstellung von Gehäuserohr und Schutzrohr dicht geschlossen ist.

Derartige Antriebseinrichtungen können zum Öffnen und Schließen von Heckklappen an Kraftfahrzeugen dienen. Dabei befindet sich die Antriebseinrichtung bei geschlossener Heckklappe in ihrer normalerweise eingenommenen Einfahrstellung und bei geöffneter Heckklappe in ihrer ausgefahrenen Stellung.

Toleranzbedingt ist zwischen den teleskopisch zueinander angeordneten Gehäuserohr und Schutzrohr ein Ringspalt gebildet, der an der Mündung des äußeren Rohres nach außen mündet.

Dadurch kann Schmutz und Feuchtigkeit durch den Ringspalt von außen zu dem im Inneren der Antriebseinrichtung befindlichen Linearantrieb gelangen und diesen beschädigen.

Aus der DE 20 2007 002306 U1 ist eine Antriebseinheit zur Betätigung einer Kraftfahrzeugklappe weitgehend der eingangs genannten Art bekannt. Dabei ist eine Schlauchdichtung mit ihrem einen Ende an dem Gehäuse des Antriebs angeordnet und nimmt in der Einfahrstellung axial mit ihrem anderen Ende, das als U-förmiges Profil ausgebildet ist, das freie Ende des äußeren Rohres auf und geht mit diesem eine lösbare Verbindung ein. Dadurch ist der Ringspalt zwischen äußerem und innerem Rohr in der Einfahrstellung nach außen hin abgedeckt.

Aus der EP 1 862 628 A1 ist eine Antriebseinrichtung der eingangs genannten Art bekannt. Dabei ist auf dem inneren Rohr eine Anordnung mit einem Dichtring fest angeordnet, in die in der Einfahrstellung das äußere Rohr so einfährt, daß es von dem Dichtring an seiner äußeren Mantelfläche umschlossen ist. Der Ringspalt wird dabei durch die Anordnung mit dem Dichtring axial verschlossen. Dabei weist die Anordnung mit dem Dichtring einen größeren Außendurchmesser als das äußere Rohr auf.

Aufgabe der Erfindung ist es eine Antriebseinrichtung der eingangs genannten Art zu schaffen, durch die bei gering gehaltenem Bauraum in einfacher Weise ein Eindringen von Schmutz und Feuchtigkeit in das Innere von Gehäuserohr und/oder Schutzrohr sowie eine Beschädigung des Dichtrings zumindest weitgehend vermieden wird.

Diese Aufgabe wird erfindungsgemäß dadurch gelöst, daß der Dichtring fest auf der zylindrischen Mantelfläche des inneren Rohres angeordnet ist und einen Außendurchmesser aufweist, der annähernd dem Innendurchmesser des äußeren Rohres von Gehäuserohr oder Schutzrohr entspricht und den Ringspalt im Bereich seiner nach außen führenden Mündung radial verschließt, wobei der aus einem elastischen Werkstoff bestehende Dichtring in der Einfahrstellung der Antriebseinrichtung mit federnder Vorspannung an der Innenwand des äußeren Rohres in Anlage ist, wobei der Dichtring einen größeren Außendurchmesser als der Innendurchmesser des äußeren Rohres aufweist und der Dichtring an seinem dem Ringspalt zugewandten Endbereich zu seinem dem Ringspalt zugewandten Ende hin sich konisch verringernd ausgebildet ist, wobei das dem Ringspalt zugewandte Ende des Dichtrings einen geringeren Durchmesser und der dem Ringspalt entfernte Bereich des Dichtrings einen größeren Durchmesser aufweist als der Außendurchmesser des Ringspalts.

Durch diese Ausbildung ist der Ringspalt in der überwiegend eingenommenen Einfahrstellung verschlossen, so daß kein Schmutz und keine Feuchtigkeit über den Ringspalt in das Innere der Antriebseinrichtung und zum Linearantrieb gelangen und diesen beschädigen kann.

Da der Dichtring einen Außendurchmesser aufweist, der annähernd dem Innendurchmesser des äußeren Rohres (Gehäuserohr oder Schutzrohr) entspricht, erhält die Antriebseinrichtung durch den Dichtring keinen größeren Außendurchmesser, so daß der erforderliche Bauraum der Antriebseinrichtung gering gehalten wird.

Da der Dichtring bei dem teleskopischen Auseinanderbewegen der Antriebseinrichtung aus der Einfahrstellung nach Verlassen der Einfahrstellung nicht mehr in Anlage an dem äußeren Rohr ist, sind auch keine durch den Dichtring verursachten Reibkräfte während der Ausfahrbewegung zu überwinden.

Dadurch ist der von dem äußeren Rohr in der Einfahrstellung überdeckte Bereich des Dichtrings durch das äußere Rohr gegen Verschmutzen und Beschädigung geschützt.

Damit der Dichtring in der Einfahrstellung der Antriebseinrichtung mit federnder Vorspannung an der Innenwand des äußeren Rohres zur Anlage kommt und damit die Sicherheit gegen Eindringen von Schmutz und Feuchtigkeit erhöht, besteht der einen größeren Außendurchmesser als dem Innendurchmesser des äußeren Rohres aufweisende Dichtring aus einem elastischen Werkstoff.

Damit das äußere Rohr bei seiner Bewegung in die Einfahrstellung nicht mit seiner Stirnseite die ihr gegenüberliegende Stirnseite des Dichtrings beaufschlagt und den Dichtring beschädigt, ist der Dichtring an seinem dem Ringspalt zugewandten Endbereich zu seinem dem Ringspalt zugewandten Ende hin sich konisch verringernd ausgebildet, wobei das dem Ringspalt zugewandte Ende des Dichtrings einen geringeren Durchmesser und der dem Ringspalt entfernte Bereich des Dichtrings einen größeren Durchmesser aufweist als der Außendurchmesser des Ringspalts.

Zur Verschleißminimierung besteht der Dichtring vorzugsweise aus einem reibfesten Werkstoff.

Der Dichtring kann durch jegliche geeignete Weise wie z.B. durch Kleben oder durch Aufspritzen auf das innere Rohr fest auf der zylindrischen Mantelfläche des inneren Rohres angeordnet sein.

Um durch die axiale Kraftbeaufschlagung bei der Bewegung des äußeren Rohres in die Einfahrstellung gegen Verschieben auf dem inneren Rohr gesichert zu sein, kann in einfacher Weise der Dichtring in eine an der radial umlaufenden äußeren Mantelfläche des Gehäuserohres oder Schutzrohres radial umlaufend ausgebildete Nut eingesetzt sein.

Darüber hinaus kann auch die Innenwand des äußeren Gehäuserohres oder äußeren Schutzrohres an dessen Mündungsbereich sich zur Mündung hin konisch erweiternd ausgebildet sein.

Vorzugsweise besitzen die Konusse an Dichtring und Gehäuserohr oder Schutzrohr annähernd den gleichen Neigungswinkel zur Längsachse der Antriebseinrichtung.

Eine vorteilhafte Ausgestaltung des Lineartriebs besteht darin, daß der Lineartrieb eine Gewindespindel aufweist, auf der eine Spindelmutter angeordnet ist, wobei die Gewindespindel von einem einen Elektromotor aufweisenden Drehantrieb drehbar antreibbar ist.

Vorzugsweise ist die Antriebseinrichtung in einem an der Karosserie angeordneten, zur Horizontalen geneigten Wasserkanal seitlich einer Heccklappe eines Kraftfahrzeugs angeordnet, wobei das geschlossene Ende des Gehäuserohres oder Schutzrohres an der Karosserie und das geschlossene Ende des Schutzrohres oder Gehäuserohres an der Heccklappe angelenkt ist und wobei bei in der maximal zueinander bewegten Einfahrstellung von Gehäuserohr und Schutzrohr die Heckklappe sich in ihrer Schließstellung und in der voneinander weg bewegten Ausfahrstellung von Gehäuserohr und Schutzrohr die Heckklappe sich in ihrer Öffnungsstellung befindet.

Damit kann bei auf das Kraftfahrzeug auftreffendem Regen das im Wasserkanal abfliesende Wasser bei geschlossener Heckklappe nicht durch den Ringspalt in das Innere der Antriebseinrichtung eindringen.

Bei geöffneter Heckklappe ist der Mündungsbereich des äußeren Rohres zusammen mit dem größten Teil der Antriebseinrichtung zumindest weitgehend aus dem Wasserkanal herausbewegt, so daß auch dann das in dem Wasserkanal abfließende Wasser nicht in die Antriebseinrichtung eintreten kann.

Um den Umgebungsbedingungen eines Kraftfahrzeugs dauerhaft standzuhalten, ist der Dichtring vorzugsweise resistent gegen Stoffe wie Öle, Fette, Reiniger, Benzin, Diesel, Bremsflüssigkeit, Frostschutzmittel und Motorenöl.

Weiterhin ist der Dichtring vorzugsweise resistent gegen UV-Strahlung und Temperaturen im Bereich zwischen - 40° C und + 100° C.

Der Dichtring hält vorzugsweise im Hinblick auf Reibung und Abrieb mindestens 30.000 Lastwechseln der Antriebseinrichtung stand ohne seine Abdichtfunktion zu verlieren.

Ausführungsbeispiele der Erfindung sind in der Zeichnung dargestellt und werden im folgenden näher beschrieben. Es zeigen
- Figur 1: eine Prinzipdarstellung in der Seitensicht eines ersten Ausführungsbeispiels einer Antriebseinrichtung im Längsschnitt am Heckbereich eines Kraftfahrzeugs
- Figur 2: eine vergrößerte Darstellung des Ausschnitts "X" in Figur 1

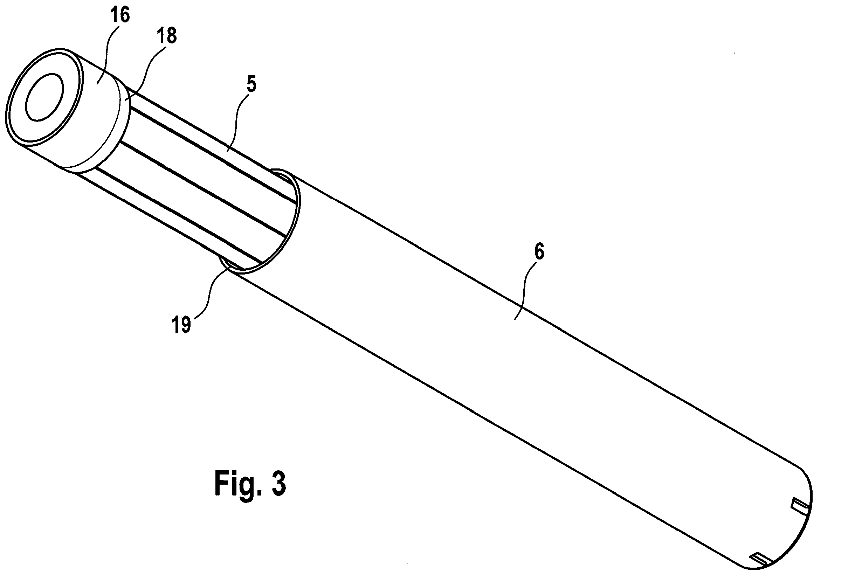

- Figur 3: eine Perspektivdarstellung von Gehäuserohr und Schutzrohr der Antriebseinrichtung nach Figur 1

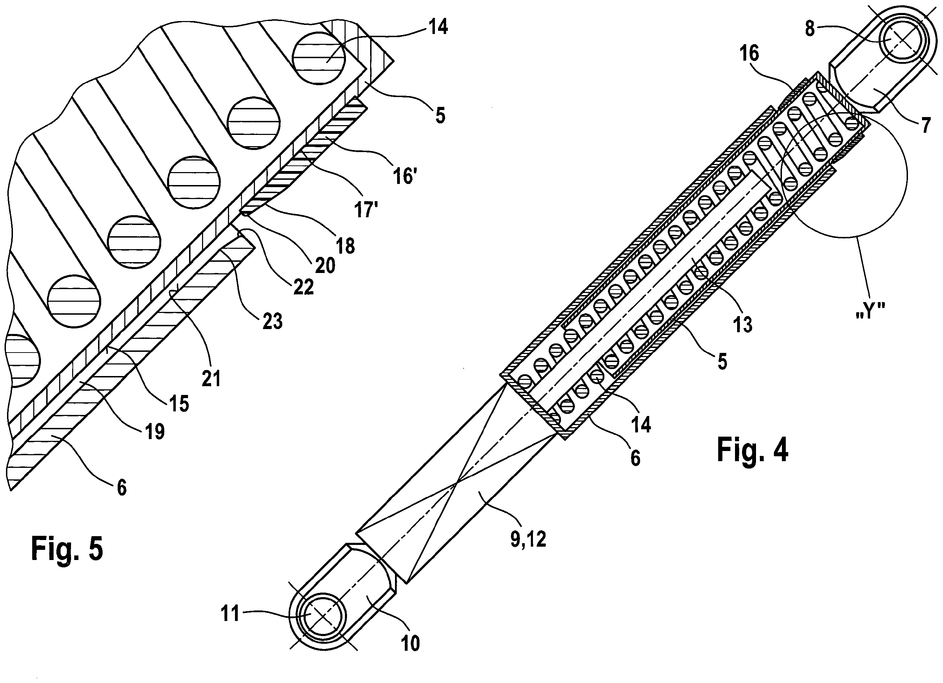

- Figur 4: ein zweites Ausführungsbeispiel einer Antriebseinrichtung im Längsschnitt
- Figur 5: eine vergrößerte Darstellung des Ausschnitts "Y" in Figur 4.

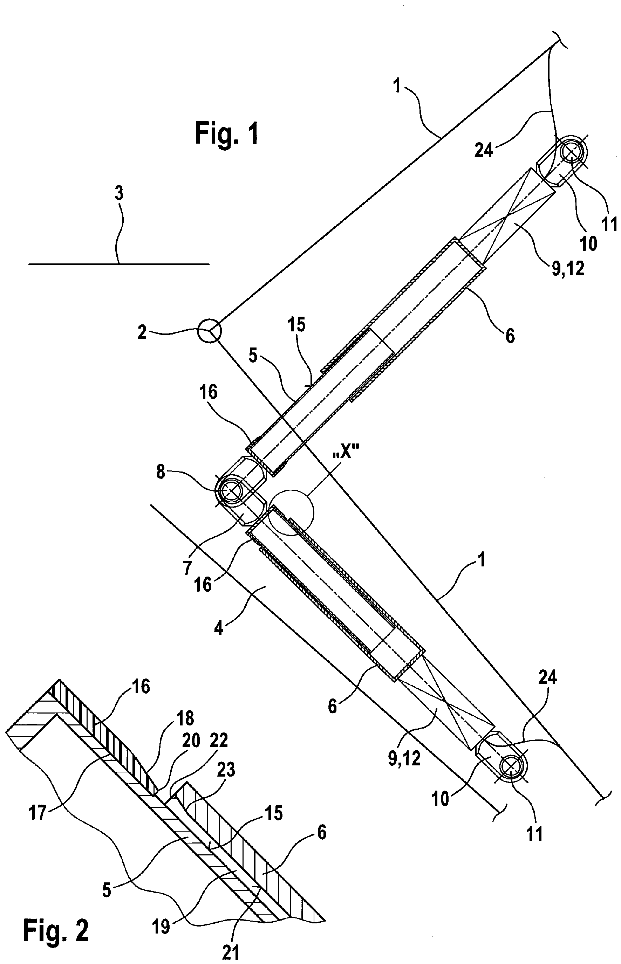

In Figur 1 ist schematisch der hintere Bereich eines Kraftfahrzeugs mit Heckklappe 1 dargestellt.

Dabei ist die Heckklappe 1 um eine horizontale Schwenkachse 2 im hinteren Endbereich des Fahrzeugdachs 3 schwenkbar gelagert.

Die Heckklappe 1 ist zum einen in ihre schräg nach unten gerichteten Schließstellung und zum anderen in ihre schräg nach oben geöffneten Öffnungsstellung schwenkbar.

In der Karosserie des Kraftfahrzeugs sind zwei Wasserkanäle 4 ausgebildet, die sich jeweils bei in Schließstellung befindlicher Heckklappe 1 entlang dem Bereich der seitlichen Ränder der Heckklappe 1 erstrecken.

Zur Schwenkbewegung der Heckklappe 1 ist zumindest in einem der Wasserkanäle 4 eine Antriebseinrichtung angeordnet, die ein Gehäuserohr 5 und ein Schutzrohr 6 aufweist.

Das Gehäuserohr 5 weist ein geschlossenes Ende auf, an dem ein erstes Anlenkelement 7 angeordnet ist, das über eine erste Achse 8 in einem Abstand zur Schwenkachse 2 im oberen Bereich des Wasserkanals 4 an der Karosserie angelenkt ist.

Auf dem Gehäuserohr 5 ist axial teleskopisch verschiebbar ein Schutzrohr 6 angeordnet, an dessen dem Gehäuserohr 5 abgewandten Ende sich ein Linearantrieb 9 koaxial anschließt.

Das dem Gehäuserohr 5 abgewandte Ende weist ein zweites Anlenkelement 10 auf, das über eine an der Heckklappe 1 in einem Abstand zur Schwenkachse 2 angeordnete zweite Achse 11 an der Heckklappe 1 angelenkt ist.

Der Linearantrieb 9 weist einen einen Elektromotor besitzenden Drehantrieb 12 auf, durch den eine nicht dargestellte Spindelmutter drehbar antreibbar ist, die auf einer Gewindespindel 13 angeordnet ist. Der Drehantrieb 12 ist über ein Kabel 24 mit einer elektrischen Energiequelle in dem Kraftfahrzeug verbunden, wobei das Kabel durch die Heckklappe 1 geführt ist.

Die Gewindespindel 13 ist koaxial durch das Schutzrohr 6 und das Gehäuserohr 5 geführt und an ihrem dem Drehantrieb 12 abgewandten Ende mit dem das erste Anlenkelement 7 aufweisenden Ende des Gehäuserohres 5 fest verbunden.

Eine vorgespannte Schraubendruckfeder 14 umschließt mit Spiel die Gewindespindel 13 und ist mit ihrem einen Ende an dem geschlossenen Ende des Gehäuserohres 5 und mit ihrem anderen Ende an dem Drehantrieb 12 abgestützt.

Der Übersicht halber sind in den Figuren 1 und 2 die Gewindespindel 13 und die Schraubendruckfeder 14 nicht dargestellt.

In dem dem ersten Anlenkelement 7 nahen Endbereich des Gehäuserohres 5 ist dessen radial umlaufende äußere Mantelfläche 15 von einem Dichtring 16, 16' umschlossen, der in eine an der Mantelfläche 15 radial umlaufend ausgebildete Ringnut 17, 17' eingesetzt ist.

Der Dichtring 16, 16' besteht aus einem reibfesten elastischen Werkstoff wie z.B. TPE (thermoplastischer Elastomer).

In der Einfahrstellung bei geschlossener Heckklappe 1 ragt der dem Schutzrohr zugewandte Endbereich 18 in einen zwischen dem Gehäuserohr 5 und dem Schutzrohr 6 gebildeten Ringspalt 19 und verschließt diesen nach außen.

Der Dichtring 16, 16' besitzt einen Außendurchmesser, der größer ist als der Innendurchmesser des Schutzrohres 6.

Dabei ist der Endbereich 18 des Dichtrings 16, 16' zu seinem dem Ringspalt 19 zugewandten Ende 20 hin sich so konisch verringernd ausgebildet, daß an dem Ende 20 der Durchmesser des Dichtrings 16, 16' kleiner ist als der Innendurchmesser des Schutzrohres 6.

Entsprechend ist die Innenwand 21 des Schutzrohres 6 an dessen Mündungsbereich 23 sich zur Mündung 22 hin konisch erweiternd ausgebildet. In der Einfahrstellung liegt der Dichtring 16, 16' mit seinem konischen Endbereich 18 mit federnder Vorspannung an dem konischen Mündungsbereich 23 des Schutzrohres 6 an und verschließt den Ringspalt 19 nach außen.

### Bezugszeichenliste

- 1: Heckklappe
- 2: Schwenkachse
- 3: Fahrzeugdach
- 4: Wasserkanal
- 5: Gehäuserohr
- 6: Schutzrohr
- 7: erstes Anlenkelement
- 8: erste Achse
- 9: Linearantrieb
- 10: zweites Anlenkelement
- 11: zweite Achse
- 12: Drehantrieb
- 13: Gewindespindel
- 14: Schraubendruckfeder
- 15: Mantelfläche
- 16: Dichtring
- 16': Dichtring
- 17: Ringnut
- 17': Ringnut
- 18: Endbereich
- 19: Ringspalt
- 20: Ende
- 21: Innenwand
- 22: Mündung
- 23: Mündungsbereich
- 24: Kabel

## Patentansprüche

1. Antriebseinrichtung insbesondere für eine Klappe eines Fahrzeugs, mit einem Gehäuserohr (5) und einem Schutzrohr (6), die teleskopisch axial relativ zueinander bewegbar sind, wobei das Gehäuserohr (5) mit seinem dem Schutzrohr (6) abgewandten geschlossenen Ende an einem feststehenden Basisteil oder einem bewegbaren Bauteil und das Schutzrohr (6) mit seinem dem Gehäuserohr (5) abgewandten geschlossenen Ende an dem bewegbaren Bauteil oder dem Basisteil angeordnet ist, mit einem im Gehäuserohr und/oder Schutzrohr (6) angeordneten Linearantrieb (9), durch den das Gehäuserohr (5) und das Schutzrohr (6) axial relativ zueinander bewegbar antreibbar sind, wobei das von dem Gehäuserohr (5) oder dem Schutzrohr (6) umschlossene Schutzrohr (6) oder Gehäuserohr (5) an seiner radial umlaufenden äußeren Mantelfläche (15) von einem Dichtring (16, 16') umschlossen ist, durch den der zwischen Gehäuserohr (5) und Schutzrohr (6) gebildete Ringspalt (19) in der maximal zueinander bewegten Einfahrstellung von Gehäuserohr (5) und Schutzrohr (6) dicht geschlossen ist, **dadurch gekennzeichnet, daß** der Dichtring (16, 16') fest auf der zylindrischen Mantelfläche des inneren Rohres (5 oder 6) angeordnet ist und einen Außendurchmesser aufweist, der annähernd dem Innendurchmesser des äußeren Rohres von Gehäuserohr oder Schutzrohr (6) entspricht und den Ringspalt (19) im Bereich seiner nach außen führenden Mündung (22) radial verschließt, wobei der aus einem elastischen Werkstoff bestehende Dichtring (16, 16') in der Einfahrstellung der Antriebseinrichtung mit federnder Vorspannung an der Innenwand (21) des äußeren Rohres (5 oder 6) in Anlage ist, wobei der Dichtring (16, 16') einen größeren Außendurchmesser als der Innendurchmesser des äußeren Rohres aufweist und der Dichtring (16, 16') an seinem dem Ringspalt (19) zugewandten Endbereich (18) zu seinem dem Ringspalt (19) zugewandten Ende (20) hin sich konisch verringernd ausgebildet ist, wobei das dem Ringspalt (19) zugewandte Ende (20) des Dichtrings (16, 16') einen geringeren Durchmesser und der dem Ringspalt (19) entfernte Bereich des Dichtrings (16, 16') einen größeren Durchmesser aufweist als der Außendurchmesser des Ringspalts (19).

2. Antriebseinrichtung nach Anspruch 1, **dadurch gekennzeichnet, daß** der Dichtring (16, 16') aus einem reibfesten Werkstoff besteht.

3. Antriebseinrichtung nach einem der Ansprüche 1 und 2, **dadurch gekennzeichnet, daß** der Dichtring (16, 16') in eine an der radial umlaufenden äußeren Mantelfläche (15) des Gehäuserohres (5) oder Schutzrohres (6) radial umlaufend ausgebildete Ringnut (17, 17') eingesetzt ist.

4. Antriebseinrichtung nach einem der Ansprüche 1 bis 3, **dadurch gekennzeichnet, daß** die Innenwand (21) des äußeren Gehäuserohres (5) oder äußeren Schutzrohres (6) an dessen Mündungsbereich (23) sich zur Mündung (22) hin konisch erweiternd ausgebildet ist.

5. Antriebseinrichtung nach einem der vorhergehenden Ansprüche, **dadurch gekennzeichnet, daß** der Lineartrieb eine Gewindespindel (13) aufweist, auf der eine Spindelmutter angeordnet ist, wobei die Gewindespindel (13) oder die Spindelmutter von einem einen Elektromotor aufweisenden Drehantrieb (12) drehbar antreibbar ist.

6. Antriebseinrichtung nach einem der vorhergehenden Ansprüche, **dadurch gekennzeichnet, daß** die Antriebseinrichtung in einem an der Karosserie angeordneten, zur Horizontalen geneigten Wasserkanal (4) seitlich einer Heckklappe (1) eines Kraftfahrzeugs angeordnet ist, wobei das geschlossene Ende des Gehäuserohres (5) oder Schutzrohres (6) an der Karosserie und das geschlossene Ende des Schutzrohres (6) oder Gehäuserohres (5) an der Heckklappe (1) angelenkt ist und wobei bei in der maximal zueinander bewegten Einfahrstellung von Gehäuserohr (5) und Schutzrohr (6) die Heccklappe (1) sich in ihrer Schließstellung und in der voneinander weg bewegten Ausfahrstellung von Gehäuserohr (5) und Schutzrohr (6) die Heckklappe (1) sich in ihrer Öffnungsstellung befindet.

## Claims

1. Drive device, in particular for a flap of a vehicle, having a housing pipe (5) and a protection pipe (6) which can be moved axially relative to each other in a telescopic manner, the housing pipe (5) being arranged with the closed end thereof facing away from the protection pipe (6) on a fixed base member or a movable component and the protection pipe (6) being arranged with the closed end thereof facing away from the housing pipe (5) on the movable component or the base member, having a linear drive (9) which is arranged in the housing pipe and/or protection pipe (6) and by which the housing pipe (5) and the protection pipe (6) can be driven so as to be axially movable relative to each other, wherein the protection pipe (6) which is surrounded by the housing pipe (5) or the housing pipe (5) which is surrounded by the protection pipe (6) is surrounded at the radially peripheral outer covering face (15) thereof by a sealing ring (16, 16'), by which the annular gap (19) which is formed between the housing pipe (5) and the protection pipe (6) is closed in a tight manner in the retracted position of the housing pipe (5) and protection pipe (6), in which position they are moved toward each other to the maximum extent, **characterized in that** the sealing ring (16, 16') is arranged securely on the cylindrical covering face of the inner pipe (5 or 6) and has an outer diameter which approximately corresponds to the inner diameter of the outer pipe of the housing pipe or protection pipe (6) and radially closes the annular gap (19) in the region of the outwardly directed mouth (22) thereof, wherein, in the retracted position of the drive device, the sealing ring (16, 16') which comprises a resilient material is in abutment with the inner wall (21) of the outer pipe (5 or 6) with resilient pretensioning, wherein the sealing ring (16, 16') has a larger outer diameter than the inner diameter of the outer pipe, and the sealing ring (16, 16') is constructed at the end region (18) thereof facing the annular gap (19) so as to conically taper in the direction toward the end (20) thereof facing the annular gap (19), the end (20) of the sealing ring (16, 16') facing the annular gap (19) having a smaller diameter and the region of the sealing ring (16, 16') remote from the annular gap (19) having a larger diameter than the outer diameter of the annular gap (19).

2. Drive device according to Claim 1, **characterized in that** the sealing ring (16, 16') comprises a friction-resistant material.

3. Drive device according to either of Claims 1 and 2, **characterized in that** the sealing ring (16, 16') is inserted into a radially peripheral annular groove (17, 17') which is formed in the radially peripheral outer covering face (15) of the housing pipe (5) or protection pipe (6).

4. Drive device according to one of Claims 1 to 3, **characterized in that** the inner wall (21) of the outer housing pipe (5) or outer protection pipe (6) at the mouth region (23) thereof is constructed so as to expand in a conical manner in the direction toward the mouth (22).

5. Drive device according to one of the preceding claims, **characterized in that** the linear drive has a threaded spindle (13) on which a spindle nut is arranged, the threaded spindle (13) or the spindle nut being able to be rotatably driven by a rotary drive (12) which has an electric motor.

6. Drive device according to one of the preceding claims, **characterized in that** the drive device is arranged in a water channel (4) which is arranged on the bodywork and which is inclined with respect to the horizontal at the side of a rear flap (1) of a motor vehicle, the closed end of the housing pipe (5) or protection pipe (6) on the bodywork and the closed end of the protection pipe (6) or housing pipe (5) being articulated to the rear flap (1) and the rear flap (1) being located in the closed position thereof in the retracted position of the housing pipe (5) and protection pipe (6), in which position they are moved toward each other to the maximum extent, and the rear flap (1) being located in the opened position thereof in the deployed position of the housing pipe (5) and protection pipe (6), in which position they are moved away from each other.

## Revendications

1. Dispositif d'entraînement en particulier pour un ouvrant d'un véhicule, avec un tube de boîtier (5) et un tube de protection (6) pouvant être déplacés axialement l'un par rapport à l'autre de manière télescopique, dans lequel le tube de boîtier (5) est disposé avec son extrémité fermée, détournée du tube de protection (6), sur une pièce de base fixe ou un composant pouvant être déplacé, et le tube de protection (6) est disposé avec son extrémité fermée, détournée du tube de boîtier (5), sur le composant pouvant être déplacé ou la pièce de base, avec un entraînement linéaire (9) disposé dans le tube de boîtier et/ou le tube de protection (6) et permettant d'entraîner le tube de boîtier (5) et le tube de protection (6) de manière à pouvoir se déplacer axialement l'un par rapport à l'autre, dans lequel le tube de protection (6) ou le tube de boîtier (5) entouré par le tube de boîtier (5) ou le tube de protection (6) est entouré sur sa surface latérale extérieure (15) radialement périphérique par une bague d'étanchéité (16, 16') qui comble hermétiquement l'espace annulaire (19) formé entre le tube de boîtier (5) et le tube de protection (6) dans la position rentrée de rapprochement mutuel maximal du tube de boîtier (5) et du tube de protection (6), **caractérisé en ce que** la bague d'étanchéité (16, 16') est disposée solidement sur la surface latérale cylindrique du tube intérieur (5 ou 6) et présente un diamètre extérieur correspondant approximativement au diamètre intérieur du tube extérieur du tube de boîtier ou du tube de protection (6) et comble radialement l'espace annulaire (19) au niveau de son orifice (22) donnant sur l'extérieur, dans lequel la bague d'étanchéité (16, 16') composée d'un matériau élastique se trouve dans la position rentrée du dispositif d'entraînement sous précontrainte élastique en butée contre la paroi intérieure (21) du tube extérieur (5 ou 6), dans lequel la bague d'étanchéité (16, 16') présente un diamètre extérieur supérieur au diamètre intérieur du tube extérieur et la bague d'étanchéité (16, 16') est réalisée au niveau de sa zone d'extrémité (18) tournée vers l'espace annulaire (19) avec une diminution conique vers son extrémité (20) tournée vers l'espace annulaire, dans lequel l'extrémité (20), tournée vers l'espace annulaire (19), de la bague d'étanchéité (16, 16') présente un diamètre inférieur, et la zone, éloignée de l'espace annulaire (19), de la bague d'étanchéité (16, 16') présente un diamètre supérieur au diamètre extérieur de l'espace annulaire (19).

2. Dispositif d'entraînement selon la revendication 1, **caractérisé en ce que** la bague d'étanchéité (16, 16') est composée d'un matériau résistant au frottement.

3. Dispositif d'entraînement selon l'une quelconque des revendications 1 et 2, **caractérisé en ce que** la bague d'étanchéité (16, 16') est insérée dans une rainure annulaire (17, 17') réalisée de manière radialement périphérique sur la surface latérale extérieure (15) radialement périphérique du tube de boîtier (5) ou du tube de protection (6).

4. Dispositif d'entraînement selon l'une quelconque des revendications 1 à 3, **caractérisé en ce que** la paroi intérieure (21) du tube de boîtier extérieur (5) ou du tube de protection extérieur (6) est réalisée avec un élargissement conique vers l'orifice (22) dans la zone d'orifice (23) de celui-ci.

5. Dispositif d'entraînement selon l'une quelconque des revendications précédentes, **caractérisé en ce que** l'entraînement linéaire présente une broche filetée (13) sur laquelle est disposé un écrou de broche, la broche filetée (13) ou l'écrou de broche pouvant être entraîné(e) en rotation par un entraînement rotatif (12) muni d'un moteur électrique.

6. Dispositif d'entraînement selon l'une quelconque des revendications précédentes, **caractérisé en ce que** le dispositif d'entraînement est disposé dans un conduit d'eau (4) disposé sur la carrosserie, incliné par rapport à l'horizontale, à côté d'un hayon (1) d'un véhicule automobile, dans lequel l'extrémité fermée du tube de boîtier (5) ou du tube de protection (6) est coudée sur la carrosserie et l'extrémité fermée du tube de protection (6) ou du tube de boîtier (5) est coudée sur le hayon (1), et dans lequel, dans la position rentrée de rapprochement mutuel maximal du tube de boîtier (5) et du tube de protection (6), le hayon (1) se trouve dans sa position de fermeture, et dans la position sortie d'écartement mutuel du tube de boîtier (5) et du tube de protection (6), le hayon (1) se trouve dans sa position ouverte.
